# EUROPEAN PATENT SPECIFICATION

(11) **EP 1 489 720 B1**
(45) Date of publication and mention of the grant of the patent: **23.10.2013**
(21) Application number: 04251770.6
(22) Date of filing: 26.03.2004
(51) Int. Cl.: H02K 1/14, H02K 1/18, H02K 15/02, H02K 33/16

(54) **Linear Compressor**
Linearkompressor
Compresseur linéaire

(30) Priority: 20.06.2003 KR 2003040275; 09.07.2003 KR 2003046421
(43) Date of publication of application: 22.12.2004
(73) Proprietor: Samsung Electronics Co., Ltd., Suwon-si, Gyeonggi-do, 443-742 (KR)
(72) Inventor: Kim, Gyeong Don, Gwangjin-gu, Seoul (KR)
(74) Representative: Grey, Ian Michael

(56) References cited:
- WO-A1-01/61831
- US-A- 2003 102 763
- US-A1- 2002 135 264
- US-A1- 2003 080 634
- US-B1- 6 238 192

## Description

The present invention relates to a stator for a linear compressor comprising a plurality of spaced metal plates arranged in a circle so that each plate lies in a plane that intersects a plane of each of the other plates at a common point. The invention also relates to a linear compressor including the stator of the invention and to a method of forming a stator for a linear compressor.

A linear compressor compresses gas refrigerant in a refrigeration or air conditioning system, such as a refrigerator or an air conditioner.

A conventional linear compressor includes a sealed outer casing which houses a linear motor and a compression unit. The linear motor is powered by electricity supplied from an external power source and drives the compression unit to draw gas refrigerant into the compressor and compress it.

The compression unit includes a cylinder block having a cylinder defining a compression chamber within the cylinder block. A cylinder head is mounted on a lower end of the cylinder block to guide gas refrigerant into and out of the compression chamber. The cylinder head includes a suction valve to allow gas refrigerant to be discharged from the compression chamber. A piston is movably received in the compression chamber and linearly reciprocates in the compression chamber in response to activation of the linear motor.

The linear motor includes cylindrically shaped inside and outside stators and a slider. The inside stator is placed around the cylinder, while the outside stator is spaced from but surrounds the inside stator. The slider is interposed between the inside and outside stators to linearly reciprocate in an axial direction and has a magnet that cooperates with the inside and outside stators to linearly move the piston in the cylinder.

The inside stator includes a plurality of thin metal plates formed from, for example, steel which arranged radially around a circumferential surface of the cylinder. To arrange the thin metal plates one end of each plate is held in position by the cylinder which the plates surround, whilst the other ends of the plates are welded together.

As the thin metal plates are welded together to maintain the cylindrical arrangement as described above, the sheets are placed in electrical contact. Therefore, when the slider linearly reciprocates, eddy currents are generated in the inside stator, resulting in an eddy current loss and a reduction in the operational efficiency of the linear compressor.

A stator for a linear compressor is known from WO 01/61831 A1 comprising a plurality of spaced metal plates arranged in a circle so that each plate lies in a plane that intersects a plane of each of the other plates at a common point. A stator for a linear compressor is also known from US 2003/0102763 A1 and US 6238192 B1.

A stator according to the present invention is characterised by a circumferentially extending holder molded from a non-conductive material to retain the plates in position, the holder having a base part, and the base part including means for mounting the holder to a linear compressor.

Preferably, the non conductive material is a resin.

In a preferred embodiment, the holder is molded around the plates after the plates have been arranged in said position.

Conveniently, each plate has upper and lower edges separated by an inside edge, the upper, lower and inside edges all being received in the holder.

The stator may comprise a locking notch on each metal plate to attach it to the holder.

The means for mounting the holder to a linear compressor may comprise a locking member disposed in the base part of the holder which is internally-threaded at an end thereof. The locking member may also be insert-molded to the holder.

The holder may be thicker, at a lower portion thereof which covers the lower edges of the metal plates, than an upper portion thereof which covers the upper edges of the metal plates, so that the holder may receive the locking member in the lower portion thereof.

Advantageously, the base part comprises an oil groove to allow oil to flow therethrough.

The stator may further comprise a projection provided on the base part of the holder for supporting the holder on a cylinder block such that a gap is defined between the holder and said cylinder block when the holder is disposed thereon.

Each plate may have an embossment which forms a protuberance on one side of said each plate and a recess on an opposing side of said each plate, so that the protuberance of each plate is received in the recess of a neighbouring plate.

Conveniently, each plate comprises a plurality of embossments which are formed along an axial line adjacent to an inside edge of each plate when the plates have been arranged in position.

In one embodiment, each spaced plate is covered with an insulating material.

The holder may have a thickness of 1mm-3mm at the upper portion thereof which covers the upper edges of the metal sheets.

The stator may further include a thick part provided along an end of an inner surface of the holder to allow the holder to be placed around the cylinder, with a gap defined between the inner surface of the holder and an outer surface of the cylinder.

The stator may further include a projection provided on a lower end of the holder to allow the holder to be placed on a cylinder block having the cylinder, with a gap defined between the lower end of the holder and the cylinder block by the projection.

According to another aspect of the invention, there is also provided a linear compressor incorporating the stator according to the present invention.

The linear compressor may further comprise a cylinder defining a chamber having a piston slidably received therein and a magnet disposed about the cylinder wherein the holder is mounted to the cylinder.

Preferably, at least a portion of the holder is spaced from the cylinder.

According to a further aspect of the invention, there is provided a method of forming a stator for a linear compressor comprising the steps of forming a metal plate assembly by taking a plurality of metal plates and connecting them together before bending them into a circular arrangement so that each plate lies in a plane that intersects a plane of each of the other plates at a common point and molding a non-conductive material around the metal plate assembly to form a holder to hold the plates in said circular arrangement, forming the holder to have a base part with means for mounting the holder to a linear compressor.

The method preferably further comprises the steps of forming an embossment on each metal plate with a protuberance on one side of each plate and a recess on an opposing side and connecting the plurality of plates together by the protuberance of each plate being received in the recess of a neighbouring plate.

Preferably, the method according further comprises the step of producing each plate by cutting in a pressing process after the embossment is formed thereon.

In one embodiment, the method further comprises the step of layering the plurality of plates on top of one another after the plate are cut and before the assembling. The method may further comprise the step of bending the plates into a circular arrangement using a cylindrical jig around which the plates are bent.

The method may also further comprise the step of the bending locking the protuberance of each plate into the recess of the adjacent plate.

Conveniently, the method further comprises the steps of disposing the metal plate assembly in a mold having a cavity and injecting molten resin into the cavity to mold the non-conductive material around the metal plate assembly.

The method may include the steps of producing a metal plate from a metal sheet, forming an embossment on the metal plate, assembling a plurality of metal plates with each other by using the embossment of each of the metal plates, to provide the metal plate assembly.

In the method, the plurality of metal plates may be produced by cutting the metal plate by using a press, one by one, and the metal plates may be sequentially assembled with each other at the embossment of each of the metal plates by using the press, thus providing the metal plate assembly.

In the method, the embossment may be formed on each of the metal plates at a position adjacent to a side edge of each of the metal plates, thus allowing the metal plate assembly to be bent into the cylindrical shape such that the metal plates are arranged in the cylindrical arrangement.

Embodiments of the present invention will now be described, by way of example only, with reference to the accompanying drawings, in which:
Figure 1 is a sectional view of a linear compressor according to an embodiment of the present invention;
Figure 2 is a partially sectioned perspective view of the inside stator forming part of the linear compressor of Figure 1;
Figure 3 is a sectional view to illustrate an embossing operation in which a plurality of locking embossments are formed on a metal plate in a method of producing the linear compressor of the present invention;
Figure 4 is a view to illustrate a cutting and stacking operation in which a plurality of thin metal plates are produced from the embossed metal plate of figure 3 and at the same time the thin metal plates are stacked to produce a metal plate assembly in the method of the present invention;
Figure 5 is a view to illustrate a bending operation in which the metal plate assembly is bent around a cylindrical jig in the method of the present invention; and
Figure 6 is a view to illustrate a holder molding operation in which a holder to hold the thin metal plates is produced in the method of the present invention.

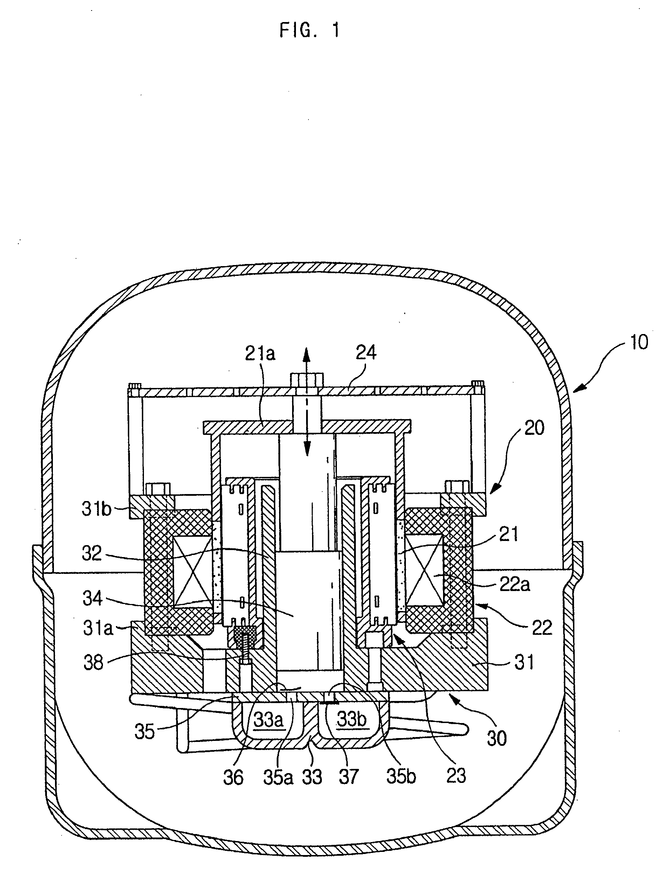

As shown in Figure 1, a linear compressor includes a compression unit 30 and a linear motor 20. The compression unit 30 draws and compresses gas refrigerant fed from an evaporation unit of a closed refrigeration circuit included in a refrigerating system or an air conditioning system operated by running a refrigeration cycle. The linear motor 20 is powered from an external power source to actuate the compression unit 30. Both the linear motor 20 and the compression unit 30 are housed in a sealed outer casing 10.

The compression unit 30 is located in a lower portion of the casing 10 and includes a cylinder block 31 defining a cylinder 32 in a central region of the cylinder block 31 to define a compression chamber therein. A cylinder head 33 is disposed on a lower end of the cylinder block 31 and guides the flow of gas refrigerant relative into and out of the compression chamber. A piston 34 is slidably received in the compression chamber and linearly reciprocates in the compression chamber in response to operation of the linear motor 20.

The cylinder head 33 defines a suction chamber 33a to guide gas refrigerant into the compression chamber and an exhaust chamber 33b to guide gas refrigerant out of the compression chamber. A valve plate 35 having both a suction port 35a and an exhaust port 35b is interposed between the cylinder block 31 and the cylinder head 33 and has a suction valve 36 and an exhaust valve 37 to open or close each of the suction port 35a and the exhaust port 35b in accordance with a linear movement of the piston 34 in the cylinder 32. Therefore, when the piston 34 moves upwardly in the cylinder 32, the suction valve 36 opens to allow gas refrigerant from the suction chamber 33a to enter the compression chamber of the cylinder 32, the refrigerant in the compression chamber of the cylinder 32 is compressed and the exhaust valve 37 is then opened to allow the compressed refrigerant to be discharged from the compression chamber into the exhaust chamber 33b through the exhaust port 35b.

The linear motor 20 includes a magnet 21 located around the cylinder 32 to cause the piston 34 to move linearly within the cylinder 32 and outside and inside stators 22,23. The outside stator 22 is located around the magnet 21, while the inside stator 23 is placed around the cylinder 32, with space between the outside and inside stators 22,23.

The magnet 21 is located in the space between the outside and inside stators 22,23 and linearly reciprocates in an axial direction relative to the stators 22,23. The magnet 21 is connected to the piston 34 at an upper end thereof via a slide element 21 a, so that the piston linearly moves in the cylinder 32 when the magnet reciprocates. A resonant spring 24 similar to a kind of plate spring, is mounted to an upper end of the piston 34 to vibrate vertically. The resonant spring 24 enhances the linear moving action of the piston 34 in the cylinder 32.

When electricity is supplied from an external power source to the outside stator 22, the outside stator 22 generates a magnetic field in cooperation with both a plurality of thin metal sheets 231 of the inside stator 23 and a coil 22a wound inside the outside stator 22. To hold the outside stator 22 to the cylinder block 31, a removable locking frame 31b is mounted to a base frame 31a by a plurality of locking bolts. The base frame integrally extends upward and outward from the lower portion of the cylinder block 31. When the outside stator 22 is bolted to the base frame 31a along with the locking frame 31b after the outside stator 22 is arranged between the base frame 31a and the locking frame 31 b, the outside stator 22 is firmly mounted to the cylinder block 31.

The inside stator 23 is arranged around the cylinder 32 to allow the magnet 21 to move in the magnetic field generated by the outside stator 22. The construction of the inside stator 23 will now be described in detail.

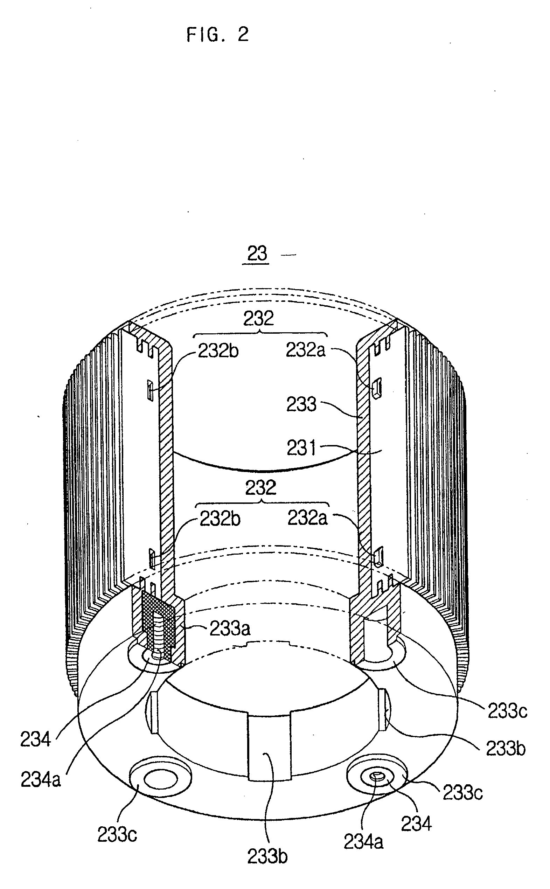

The inside stator 23 has a cylindrical shape and is placed around the cylinder 32. As shown in Figure 2, the inside stator 23 is produced by arranging the plurality of thin metal plates 231 in a cylindrical arrangement with the place of each plate being radially inwardly direct. To prevent the thin metal plates 231 of the inside stator 23 from being brought into electrical contact with each other, each of them is covered with an insulating coat.

The thin metal plates 231 each have a plurality of locking embossments 232 at upper and lower portions thereof. The embossments 232 allow the thin metal plates 231 to be assembled with each other into a metal plate assembly. The embossments 232 maybe formed on each of the thin metal plates 231 through an appropriate machining process, such as a pressing process. Each of the embossments 232 thus has a protuberance 232a and a recess 232b on both sides of each of the thin metal plates 231. The protuberances 232a of a thin metal plate 231 is inserted into the recess 232b of a neighbouring thin metal plate 231 so that the overall metal plates 231 are assembled with each other into a metal sheet assembly. In an embodiment of the present invention, two embossments 232 are formed on the upper and lower portions of each of the thin metal plates 231 to be aligned with each other along an axial line adjacent to an inside edge of the metal plate 231. Therefore, after the overall metal plates 231 are assembled with each other at the embossments 232 into the metal plate assembly, the metal plate assembly is bent into a desired cylindrical shape such that the inside edges of the metal plates 231 adjacent to the embossments 232 form an inner surface of the cylindrical inside stator 23.

To hold the thin metal plates 231 at desired positions in the inside stator 23, which is fabricated by bending the metal plate assembly into the cylindrical shape, the inside stator 23 includes a holder 233. The holder 223 holds the upper edges, inside edges and lower edges of the thin metal plates 231, which are arranged in the cylindrical arrangement. That is, the thin metal plates 231 in the metal plate assembly, which is bent into the cylindrical shape, are insert-molded to the holder 233 so as to be held in a cylindrical arrangement.

In an embodiment of the invention, the holder 233 is made of a resin material, such as plastic, which is nonconductive and easily molded. Due to the holder 233, the thin metal plates 231 are reliably held in the desired positions in the cylindrical arrangement while maintaining an electrically insulated state between the metal plates 231, so that it is possible to prevent eddy currents from being generated in the inside stator 23. Thus, the linear compressor having the inside stator 23 of the present invention does not suffer any eddy current loss.

The holder includes a thick part 233a, having an inner diameter corresponding to an outer diameter of the cylinder 32 along a lower end of an inner surface of the holder 233. Due to the thick part 233a of the holder 233, the holder 233, except for the thick part 233a, is spaced apart from an outer surface of the cylinder 32, with a cylindrical gap defined between the inner surface of the holder 233 and the outer surface of the cylinder 32, when the inside stator 23 is placed around the cylinder 32. When the linear compression is operational, heat is effectively dissipated from the cylinder 32 to outside of the cylinder 32 through the cylindrical gap between the inner surface of the holder 233 and the outer surface of the cylinder 32.

In addition, a plurality of oil grooves 233b are formed on the inner surface of the thick part 233a of the holder 233 in vertical directions at angularly spaced positions to guide oil from the cylindrical gap between the inside stator 23 and the cylinder 32 in a downward direction. A plurality of angularly spaced projections 233c are provided on a lower surface of the holder 233 so that the inside stator 23 is placed on the cylinder block 31 and is supported by the projections 233c, with a horizontal gap between the lower end of the holder 233 of the inside stator 23 and the cylinder block 31 which acts as a passage to allow oil to pass. Therefore, the oil, which flows into the cylindrical gap between the inner surface of the holder 233 and the outer surface of the cylinder 32, sequentially passes through the oil grooves 233b formed on the inner surface of the thick part 233a and through the horizontal gap defined between the lower end of the holder 233 and the cylinder block 31 by the projections 233c, prior to being drained downward to outside of the cylinder block 31.

Each of the thin metal plates 231 have two locking notches 231a on each of the upper and lower edges thereof to lock the thin metal plates 231 to the holder 233 during an insert-molding process of forming the holder 233 using a resin material. During the insert-molding process of forming the holder 233, the molten resin material fills the locking notches 231a formed at the upper and lower edges of the thin metal plates 231. When the resin material hardens, the metal plates 231 are firmly held by the holder 233.

The inside stator 23 has a plurality of locking members 234 which lock the inside stator 23 to the cylinder 32. The locking members 234 each have an internally-threaded hole 234a into which a fastening member, such as a setscrew 38, is tightened to lock the inside stator 23 to the cylinder 32. Each of the locking members 234 is made of a metal that has a higher strength than the resin material of the holder 233. The use of the metal locking members 234 in the holder 233 is necessary because the fastening members such as the setscrews 38 used to lock the inside stator 23 to the cylinder 32, are made of a metal having a higher strength than the resin material of the holder 233. Therefore, when the metal fastening members are directly tightened to the holder 233 without using the metal locking members 234, the resin holder 233 may be abraded or broken at fastened parts thereof when the linear compressor is operational for long periods. In such a case, the locking state of the inside stator 23 relative to the cylinder 32 may be loosened, so that the inside stator 23 of the present invention uses the metal locking members 234 in the holder 233. In the embodiment illustrated in the drawings, the projections 233c are provided around the internally-threaded holes 234a of the locking members 234.

In an embodiment of the invention, two locking members 234 are set on the lower end of the holder 233 at diametrically opposite positions through the insert-molding process wherein the two locking members 234 along with the thin metal sheets 231 are integrated with the holder 233. As described above, the locking members 234 each have the internally-threaded hole 234a at the end thereof to allow the setscrew 38 to be tightened to each of the locking members 234. The inside stator 23 is thus locked to the cylinder 32 by using the setscrews 38.

In an embodiment of the invention, the holder 233 has a thickness of 1mm - 3mm at the upper portion thereof which covers the upper edges of the thin metal plates 231. The above-mentioned thickness of the upper portion of the holder 233 is determined such that the molten resin material easily flows through a part of a cavity defined in a mold M to form the upper portion of the holder 233 prior to filling a remaining part of the cavity during the insert-molding process, and the resulting upper portion of the holder 233 does not disturb a reciprocation of the slider 21a during the operation of the linear compressor.

The linear compressor of the present invention having the above mentioned construction is produced as follows. A method of producing the linear compressor includes several operations to manufacture the inside stator 23. That is, the method of producing the linear compressor includes forming a plurality of embossments 232 on a metal sheet O, cutting the metal sheet O having the embossments 232 through a pressing process to produce a plurality of thin metal plates 231, assembling the plurality of thin metal plates 231 with each other by using the embossments 232 to provide a metal plate assembly, bending the metal plate assembly into a cylindrical shape to allow the thin metal plates 231 to be arranged in a cylindrical arrangement, and forming a holder 233 to hold the thin metal plates 231 in desired positions thereof in the cylindrical arrangement, through an insert-molding process.

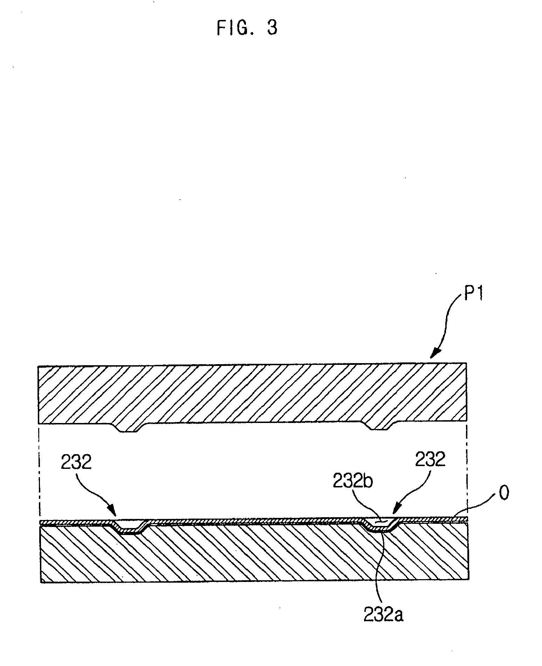

In the operation of forming of the embossments 232 on the metal sheet O, the metal sheet O is subjected to a pressing process to form the embossments 232 by using a first press P1 which is an embossing press, as shown in Figure 3. In such a case, each of the embossments 232 forms a protuberance 232a and a recess 232b on both sides of the metal sheet O.

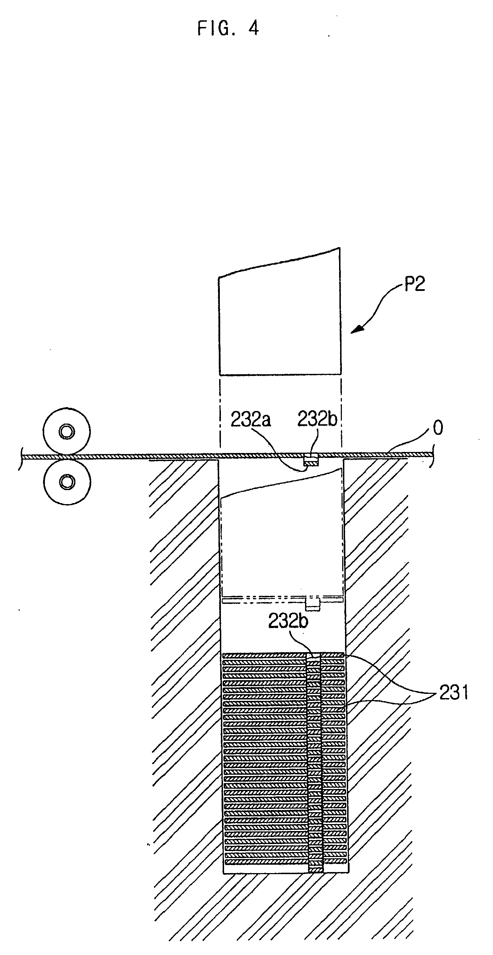

The metal sheet O having the embossments 232 is, thereafter, cut into a plurality of pieces one by one to produce the thin metal plates 231, as shown in Figure 4. To produce the thin metal plates 231, the metal sheet O having the embossments 232 is fed to a second press P2 which is a cutting press to cut the metal sheet O into the pieces having a predetermined size. Immediately after each of the thin metal plates 231 is cut from the metal sheet O by using the second press P2, the thin metal plate 231 is layered on top of an uppermost thin metal plate of the metal plate assembly vertically placed at a position under the second press P2. In such a case, each of the thin metal plates 231 is pushed downward by the second press P2 to be layered on top of the uppermost thin metal plate of the metal plate assembly, just after the thin metal plate 231 is cut from the metal sheet O by the second press P2. The thin metal plates 231 in the metal plate assembly are locked to each other by the embossments 232 thereof.

In an embodiment of the present invention, the cutting of the metal sheet O having the embossments 232 through the pressing process to produce the thin metal plates 231, and the layering and assembling of the thin metal plates 231 with each other by the embossments 232 to provide the metal plate assembly are executed at the same time by using the second press P2. However, it should be understood that the cutting of the metal sheet O into the thin metal plates 231, and the layering and assembling of the thin metal plates 231 into the metal plate assembly may be variously changed, without affecting the functioning of the present invention.

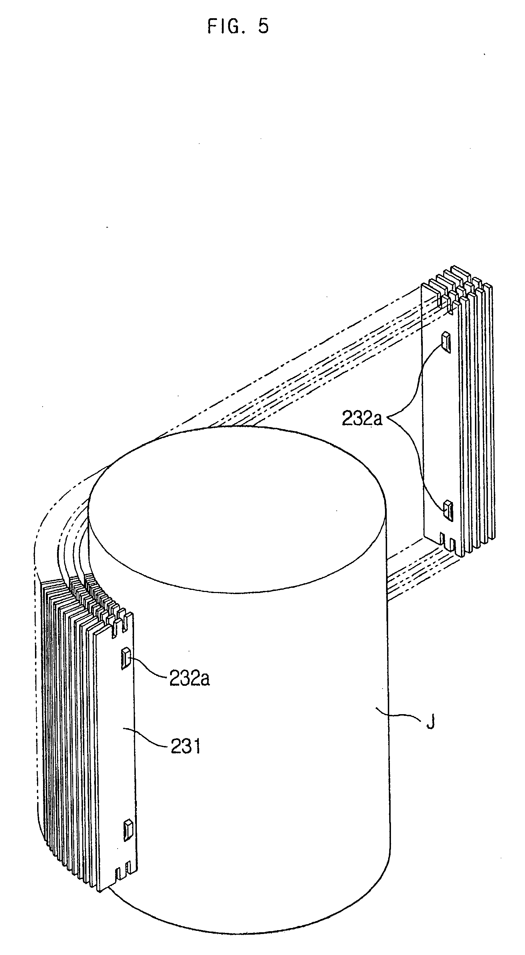

The metal plate assembly with the thin metal plates 231 locked to each other by using the embossments 232 is, thereafter, bent into the cylindrical shape, as shown in Figure 5, to allow the thin metal plates 231 to be arranged in the cylindrical arrangement. To bend the metal plate assembly into the cylindrical shape, a cylindrical jig J is provided. The metal plate assembly is bent around the jig J such that the inside edges of the thin metal plates 231 adjacent to the embossments 232 are supported against an outer surface of the jig J.

After the metal plate assembly is bent into the cylindrical shape around the jig J to allow the thin metal plates 231 to be arranged in the cylindrical arrangement, the protuberances 232a of the embossments 232 of a thin metal plate 231 placed at a first end of the metal plate assembly are locked into the recesses 232b of the embossments 232 of another metal plate 231 placed at a second end of the metal plate assembly. Therefore, the cylindrical arrangement of the thin metal plates 231 is accomplished.

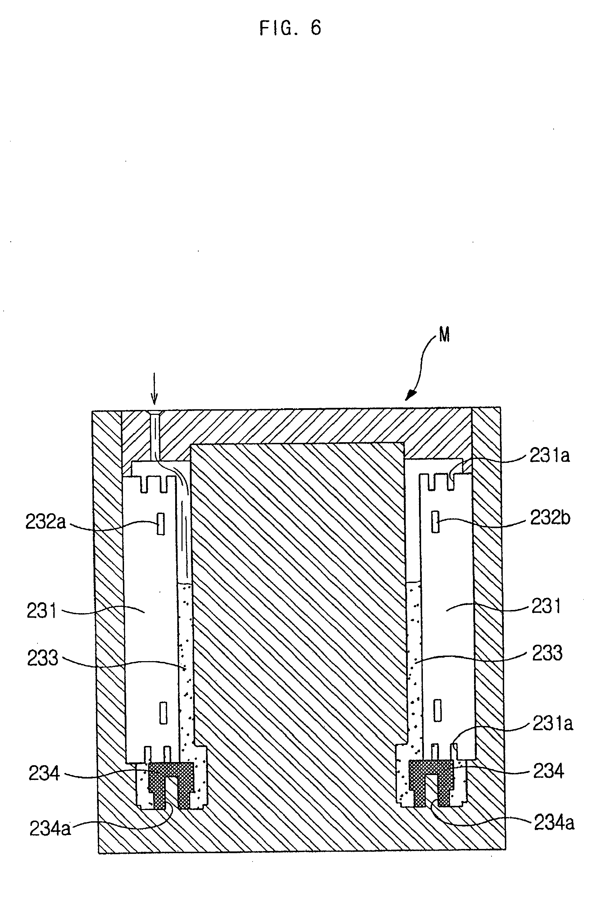

Thereafter, the thin metal plates 231 which are arranged in the cylindrical arrangement are set in the mold M, and a molten resin material is injected into the cavity of the mold M having the thin metal plates 231, as shown in Figure 6, thus forming the holder 233 which firmly holds the thin metal plates 231 in desired positions in the cylindrical arrangement. The inside stator 23 having the thin metal plates 231 is thus produced.

The linear compressor of the present invention is produced and operated as follows.

To produce the inside stator 23 of the linear compressor, a plurality of embossments 232 are formed on a metal sheet O, prior to cutting the metal sheet O having the embossments 232 to produce a plurality of thin metal plates 231. Thereafter, the plurality of thin metal plates 231 are layered and assembled with each other by using the embossments 232 to provide a metal plate assembly, prior to bending the metal plate assembly into a cylindrical shape. Thereafter, a plurality of locking members 234 are arranged at desired positions on a surface formed by the lower ends of the thin metal plates 231. The thin metal plates 231 with the locking members 234 are installed in a mold M for an insert-molding process. Thereafter, a molten resin material is injected into the cavity of the mold M and is hardened, thus forming the holder 233. The holder 233 covers the upper edges, inside edges and lower edges of the thin metal plates 231, thus firmly holding the thin metal plates 231 in desired positions in the cylindrical arrangement.

In the inside stator 23, the holder 233 is made of a non-conductive resin material, so that the holder 233 does not allow the thin metal plates 231 to be in electrical contact with each other while holding the thin metal plates 231. In addition, the molten resin material fills the locking notches 231a of the thin metal plates 231 during the insert-molding process, the thin metal plates 231 are firmly held by the holder 233 by the resin material filling the locking notches 231 a.

The inside stator 23 is fastened to the cylinder block 31 by means of the fastening members, such as the setscrews 38, which pass through the cylinder block 31 to be tightened to the internally-threaded holes 234a of the locking members 234. Therefore, it is easy to install the inside stator 23 in the linear compressor.

As apparent from the above description, the present invention provides a linear compressor and a method of producing the linear compressor. In an inside stator of a linear motor of the linear compressor, a plurality of thin metal plates which are arranged in a cylindrical arrangement are insert-molded to a holder that is made of a nonconductive resin material, so that the thin metal plates are prevented from being in electrical contact with each other. Therefore, the linear compressor does not generate eddy currents in the inside stator, and prevents an eddy current loss.

In addition, the inside stator is fastened to a cylinder block by means of a fastening member, such as a setscrew, which passes through the cylinder block to be tightened to an internally-threaded hole of a locking member insert-molded to the holder. Therefore, work efficiency is improved during a process of producing the linear compressor.

## Claims

1. A stator for a linear compressor comprising a plurality of spaced metal plates (231) arranged in a circle so that each plate (231) lies in a plane that intersects a plane of each of the other plates (231) at a common point, **characterised by** a circumferentially extending holder (233) molded from a non-conductive material to retain the plates (231) in position, the holder (233) having a base part (233a), and the base part including means (234a) for mounting the holder (233) to a linear compressor.

2. A stator according to claim 1, wherein the holder (233) extends circumferentially.

3. A stator according to claim 1 or claim 2, wherein the non-conductive material is a resin.

4. A stator according to any of claims 1 to 3, wherein the holder (233) is molded around the plates (231) after the plates (231) have been arranged in said position.

5. A stator according to any of claims 1 to 4, wherein each plate (231) has upper and lower edges separated by an inside edge, the upper, lower and inside edges all being received in the holder (233).

6. A stator according to any preceding claim comprising a locking notch (231 a) on each metal plate (231) to attach it to the holder (233).

7. A stator according to any preceding claim, wherein the means for mounting the holder (233) to a linear compressor comprises a locking member (234) disposed in the base part (233a) of the holder (233) and internally-threaded (234a) at an end thereof.

8. A stator according to claim 7, wherein the base part (233a) comprises an oil groove (233b) to allow oil to flow therethrough.

9. A stator according to claim 8, further comprising a projection (233c) provided on the base part (233a) of the holder (233) for supporting the holder (233) on a cylinder block such that a gap is defined between the holder (233) and said cylinder block when the holder (233) is disposed thereon.

10. A stator according to any preceding claim, wherein each plate (231) has an embossment (232) which forms a protuberance (232a) on one side of said each plate (231) and a recess (232b) on an opposing side of said each plate (231), so that the protuberance (232a) of each plate (231) is received in the recess (232b) of a neighbouring plate (231).

11. A stator according to claim 10, wherein each plate (231) comprises a plurality of embossments (232) which are formed along an axial line adjacent to an inside edge of each plate (231) when the plates (231) have been arranged in position.

12. A stator according to any preceding claim wherein each spaced plate (231) is covered with an insulating material.

13. A linear compressor including a stator (23) according to any preceding claim.

14. A linear compressor according to claim 13 comprising a cylinder (32) defining a chamber having a piston (34) slidably received therein and a magnet (21) disposed about the cylinder (32) wherein the holder (233) is mounted to the cylinder (32).

15. A linear compressor according to claim 14 wherein at least a portion of the holder (233) is spaced from the cylinder (32).

16. A method of forming a stator for a linear compressor according to any of claims 1 to 12 comprising the steps of forming a metal plate assembly by taking a plurality of metal plates (231) and connecting them together before bending them into a circular arrangement so that each plate (231) lies in a plane that intersects a plane of each of the other plates (231) at a common point **characterised by** molding a non-conductive material around the metal plate assembly to form a holder to hold the plates in said circular arrangement and forming the holder (233) to have a base part (233a) with means (234a) for mounting the holder (233) to a linear compressor.

17. A method according to claim 16, further comprising the steps of forming an embossment on each metal plate (231) with a protuberance (232a) on one side of each plate (231) and a recess (232b) on an opposing side and connecting the plurality of plates together by the protuberance (232a) of each plate (231) being received in the recess (232b) of a neighbouring plate (231).

18. A method according to claim 17, further comprising the step of producing each plate (231) by cutting in a pressing process after the embossment is formed thereon.

19. A method according to claim 18 further comprising the step of layering the plurality of plates (231) on top of one another after the plate (231) are cut and before the assembling.

20. A method according to claim 19, further comprising the step of bending the plates into a circular arrangement using a cylindrical jig around which the plates are bent.

21. A method according to claim 20, further comprising the step of bending locking the protuberance of each plate into the recess of the adjacent plate.

22. A method according to claim 16, further comprising the steps of disposing the metal plate assembly in a mold having a cavity and injecting molten resin into the cavity to mold the non-conductive material around the metal plate assembly.

## Patentansprüche

1. Stator für einen Linearkompressor, umfassend mehrere beabstandete Metallplatten (231), die in einem Kreis angeordnet sind, so dass jede Platte (231) in einer Ebene liegt, die eine Ebene jeder der anderen Platten (231) in einem gemeinsamen Punkt schneidet, **gekennzeichnet durch** einen sich in Umfangsrichtung erstreckenden Halter (233) der aus einem nicht leitenden Material gegossen ist, um die Platten (231) in Position zu halten, wobei der Halter (233) einen Basisteil (233a) aufweist und der Basisteil Mittel (234a) zum Anbauen des Halters (233) an einem Linearkompressor umfasst.

2. Stator nach Anspruch 1, wobei sich der Halter (233) in Umfangsrichtung erstreckt.

3. Stator nach Anspruch 1 oder Anspruch 2, wobei es sich bei dem nichtleitenden Material um ein Harz handelt.

4. Stator nach einem der Ansprüche 1 bis 3, wobei der Halter (233) um die Platten (231) gegossen wird, nachdem die Platten (231) in der Position angeordnet worden sind.

5. Stator nach einem der Ansprüche 1 bis 4, wobei jede Platte (231) einen oberen und einen unteren Rand aufweist, die von einem inneren Rand getrennt sind, wobei der obere, der untere und der innere Rand alle in dem Halter (233) aufgenommen sind.

6. Stator nach einem der vorangehenden Ansprüche, umfassend eine Sperrkerbe (231a) an jeder Metallplatte (231), um sie an dem Halter (233) anzubringen.

7. Stator nach einem der vorangehenden Ansprüche, wobei das Mittel zum Anbauen des Halters (233) an einem Linearkompressor ein Sperrelement (234) umfasst, das in dem Basisteil (233a) des Halters (233) angeordnet ist und an einem Ende desselben mit einem Innengewinde (234a) versehen ist.

8. Stator nach Anspruch 7, wobei der Basisteil (233a) eine Ölnut (233b) umfasst, um Öl dadurch hindurch fließen zu lassen.

9. Stator nach Anspruch 8, weiter umfassend einen Vorsprung (233c), der an dem Basisteil (233a) des Halters (233) vorgesehen ist, um den Halter (233) an einem Zylinderblock zu tragen, so dass ein Spalt zwischen dem Halter (233) und dem Zylinderblock definiert ist, wenn der Halter (233) daran angeordnet ist.

10. Stator nach einem der vorangehenden Ansprüche, wobei jede Platte (231) eine Prägung (232) aufweist, die eine Erhebung (232a) auf einer Seite jeder Platte (231) und eine Vertiefung (232b) auf einer gegenüberliegenden Seite jeder Platte (231) bildet, so dass die Erhebung (232a) jeder Platte (231) in der Vertiefung (232b) einer benachbarten Platte (231) aufgenommen wird.

11. Stator nach Anspruch 10, wobei jede Platte (231) mehrere Prägungen (232) umfasst, die entlang einer axialen Linie neben einem inneren Rand jeder Platte (231) gebildet sind, wenn die Platten (231) in Position angeordnet worden sind.

12. Stator nach einem der vorangehenden Ansprüche, wobei jede beabstandete Platte (231) mit einem isolierenden Material bedeckt ist.

13. Linearkompressor, umfassend einen Stator (23) nach einem der vorangehenden Ansprüche.

14. Linearkompressor nach Anspruch 13, umfassend einen Zylinder (32), der eine Kammer mit einem gleitfähig darin aufgenommenen Kolben (34) und einen um den Zylinder (32) angeordneten Magneten (21) umfasst, wobei der Halter (233) an den Zylinder (32) angebaut ist.

15. Linearkompressor nach Anspruch 14, wobei mindestens ein Abschnitt des Halters (233) von dem Zylinder (32) beabstandet ist.

16. Verfahren zum Bilden eines Stators für einen Linearkompressor nach einem der Ansprüche 1 bis 12, umfassend die Schritte des Bildens einer Metallplattengruppe durch Nehmen mehrerer Metallplatten (231) und Verbinden derselben miteinander, bevor sie in eine kreisförmige Anordnung gebogen werden, so dass jede Platte (231) in einer Ebene liegt, die eine Ebene von jeder der anderen Platten (231) in einem gemeinsamen Punkt schneidet, **gekennzeichnet durch** Gießen eines nichtleitenden Materials um die Metallplattengruppe, um einen Halter zum Halten der Platten in der kreisförmigen Anordnung zu bilden, und Ausbilden des Halters (233) dazu, einen Basisteil (233a) mit Mitteln (234a) zum Anbauen des Halters (233) an einem Linearkompressor aufzuweisen.

17. Verfahren nach Anspruch 16, weiter umfassend die Schritte des Bildens einer Prägung an jeder Metallplatte (231) mit einer Erhebung (232a) auf einer Seite jeder Platte (231) und eine Vertiefung (232b) auf einer gegenüberliegenden Seite und Verbinden der mehreren Platten miteinander, indem die Erhebung (232a) jeder Platte (231) in der Vertiefung (232b) einer benachbarten Platte (231) aufgenommen wird.

18. Verfahren nach Anspruch 17, weiter umfassend den Schritt des Herstellens jeder Platte (231) durch Schneiden in einem Pressprozess, nachdem die Prägung daran gebildet wird.

19. Verfahren nach Anspruch 18, weiter umfassend den Schritt des Schichtens der mehreren Platten (231) aufeinander, nachdem die Platten (231) geschnitten werden und vor dem Zusammenbau.

20. Verfahren nach Anspruch 19, weiter umfassend den Schritt des Biegens der Platten zu einer kreisförmigen Anordnung unter Verwendung einer zylindrischen Hilfsvorrichtung, um die die Platten gebogen werden.

21. Verfahren nach Anspruch 20, weiter umfassend den Schritt des Biegesperrens der Erhebung jeder Platte in der Vertiefung der daneben liegenden Platte.

22. Verfahren nach Anspruch 16, weiter umfassend die Schritte des Anordnens der Metallplattengruppe in einem Formwerkzeug mit einer Höhlung und Einspritzen von geschmolzenem Harz in die Höhlung, um das nichtleitende Material um die Metallplattengruppe zu gießen.

## Revendications

1. Stator destiné à un compresseur linéaire comprenant une pluralité de plaques métalliques espacées (231) lesquelles sont agencées en cercle de sorte que chaque plaque (231) se situe dans un plan qui est en intersection avec un plan de chacune des autres plaques (231) au niveau d'un point commun, **caractérisé par** un support s'étendant dans un plan circonférentiel (233) moulé en un matériau non conducteur afin de retenir les plaques (231) en position, le support (233) possédant une partie base (233a), et la partie base comportant des moyens (234a) destinés à monter le support (233) sur un compresseur linéaire.

2. Stator selon la revendication 1, le support (233) s'étendant dans un plan circonférentiel.

3. Stator selon la revendication 1 ou la revendication 2, le matériau non conducteur étant une résine.

4. Stator selon l'une quelconque des revendications 1 à 3, le support (233) étant moulé autour des plaques (231) une fois que les plaques (231) ont été agencées dans ladite position.

5. Stator selon l'une quelconque des revendications 1 à 4, chaque plaque (231) possédant des bords supérieur et inférieur lesquels sont séparés par un bord interne, les bords supérieur, inférieur et interne étant tous reçus dans le support (233).

6. Stator selon l'une quelconque des revendications précédentes, comportant une entaille de verrouillage (231a) sur chaque plaque métallique (231) afin de l'attacher au support (233).

7. Stator selon l'une quelconque des revendications précédentes, les moyens destinés à monter le support (233) sur un compresseur linéaire comprenant un élément de verrouillage (234) lequel est disposé dans la partie base (233a) du support (233) et présente un filetage interne (234a) au niveau de son extrémité.

8. Stator selon la revendication 7, la partie base (233a) comprenant une rainure à huile (233b) permettant à de l'huile de passer à travers celle-ci par écoulement.

9. Stator selon la revendication 8, comprenant en outre une saillie (233c) laquelle est prévue sur la partie base (233a) du support (233) afin de soutenir le support (233) sur un bloc-cylindre de telle sorte qu'un intervalle est défini entre le support (233) et ledit bloc-cylindre lorsque le support (233) est disposé sur celui-ci.

10. Stator selon l'une quelconque des revendications précédentes, chaque plaque (231) possédant une empreinte (232) laquelle forme une protubérance (232a) sur un côté de ladite chaque plaque (231) et un évidement (232b) sur un côté opposé de ladite chaque plaque (231), de sorte que la protubérance (232a) de chaque plaque (231) est reçue dans l'évidement (232b) d'une plaque voisine (231).

11. Stator selon la revendication 10, chaque plaque (231) comprenant une pluralité d'empreintes (232) qui sont formées le long d'une ligne axiale en position adjacente à un bord interne de chaque plaque (231) lorsque les plaques (231) ont été agencées en position.

12. Stator selon l'une quelconque des revendications précédentes, chaque plaque espacée (231) étant couverte d'un matériau isolant.

13. Compresseur linéaire comportant un stator (23) selon l'une quelconque des revendications précédentes.

14. Compresseur linéaire selon la revendication 13, comprenant un cylindre (32) définissant une chambre avec un piston (34) lequel est reçu de façon coulissante dans celle-ci, et un aimant (21) disposé autour du cylindre (32), cas dans lequel le support (233) est monté sur le cylindre (32).

15. Compresseur linéaire selon la revendication 14, une portion au moins du support (233) étant espacée du cylindre (32).

16. Procédé de formage d'un stator destiné à un compresseur linéaire selon l'une quelconque des revendications 1 à 12, comprenant les étapes consistant à former un ensemble plaques métalliques en prenant une pluralité de plaques métalliques (231) et en les raccordant les unes aux autres avant de les cintrer suivant un agencement circulaire de sorte que chaque plaque (231) se situe dans un plan qui est en intersection avec un plan de chacune des autres plaques (231) au niveau d'un point commun, **caractérisé par** le moulage d'un matériau non conducteur autour de l'ensemble plaques métalliques afin de former un support destiné à maintenir les plaques dans ledit agencement circulaire ainsi que le formage du support (233) pour qu'il possède une partie base (233a) avec des moyens (234a) destinés à monter le support (233) sur un compresseur linéaire.

17. Procédé selon la revendication 16, comprenant en outre les étapes consistant à former une empreinte sur chaque plaque métallique (231), avec une protubérance (232a) sur un côté de chaque plaque (231) et un évidement (232b) sur un côté opposé, et à raccorder la pluralité de plaques les unes aux autres en faisant que la protubérance (232a) de chaque plaque (231) est reçue dans l'évidement (232b) d'une plaque voisine (231).

18. Procédé selon la revendication 17, comprenant en outre l'étape consistant à produire chaque plaque (231) par découpage, lors d'un processus de pressage, une fois que l'empreinte est formée sur celle-ci.

19. Procédé selon la revendication 18, comprenant en outre l'étape consistant à agencer en couches la pluralité de plaques (231) l'une sur l'autre, une fois que les plaques (231) ont été découpées, et avant l'assemblage.

20. Procédé selon la revendication 19, comprenant en outre l'étape consistant à cintrer les plaques en un agencement circulaire grâce à l'utilisation d'un gabarit cylindrique autour duquel les plaques sont soumises à un cintrage.

21. Procédé selon la revendication 20, comprenant en outre l'étape consistant à effectuer le cintrage-verrouillage de la protubérance de chaque plaque dans l'évidement de la plaque adjacente.

22. Procédé selon la revendication 16, comprenant en outre les étapes consistant à disposer l'ensemble plaques métalliques dans un moule pourvu d'une cavité et à injecter de la résine fondue dans la cavité afin de mouler le matériau non conducteur autour de l'ensemble plaques métalliques.
